# EUROPÄISCHE PATENTANMELDUNG

(11) **EP 0 761 278 A2**
(43) Veröffentlichungstag der Anmeldung: **12.03.1997**
(21) Anmeldenummer: 96112523.4
(22) Anmeldetag: 02.08.1996
(51) Int. Cl.: B01D 29/11, B01D 46/02

(54) **Befestigungsvorrichtung für Filterüberzüge**

(30) Priorität: 04.09.1995 DE 19532579
(71) Anmelder: PREMARK FEG CORPORATION, Wilmington, Delaware 19801 (US)
(72) Erfinder: Truetsch, Claus, 77933 Lahr (DE)
(74) Vertreter: Füchsle, Klaus, Dipl.-Ing.

(57) **Zusammenfassung**

Eine Befestigungsvorrichtung für einen Filterüberzug auf einem Filterelement, insbesondere einer zylinderförmigen Kerze mit einer Mantelfläche und mit einer ersten Stirnseite im Bereich des einen Endes des Filterelements (10) ist dadurch gekennzeichnet, daß ein elastisches Anpreßelement (20) den Filterüberzug (14) im nahe der ersten Stirnseite des Filterelements gelegenen Bereich der Mantelfläche des Filterelements eng anliegend umgibt, ein elastisches Abdichtelement (20) an der ersten Stirnseite des Filterelements (10) im Bereich des Überganges zur Mantelfläche eng anliegt und ein Fixierelement (22) das elastische Anpreßelement (20) und das elastische Abdichtelement (20) jeweils in ihrer Lage fixiert.

## Beschreibung

Die Erfindung betrifft eine Befestigungsvorrichtung für einen Filterüberzug auf einem Filterelement, insbesondere einer zylinderförmigen Filterkerze, gemäß dem Oberbegriff des Patentanspruches 1.

Derartige Filterelemente werden in Filtervorrichtungen verwendet, die beispielsweise dem Trennen von dispiergierten Feststoffen oder Flüssigkeiten aus einer Flüssigkeit dienen. In derartige Filtervorrichtungen werden mit dispersen Feststoffen oder Flüssigkeiten beladene Flüssigkeiten eingeleitet und die zu behandelnde Flüssigkeit tritt in der Filtervorrichtung durch die Filterelemente hindurch und wird in abgereinigter Form als Filtrat durch das Innere der Filterelemente aus der Filtervorrichtung abgeführt.

Die zur Anwendung gelangenden Filterelemente besitzen häufig eine zylinderförmige Form und sind mit einer Vielzahl von Durchtrittsöffnungen für das Filtrat versehen. Am Außenumfang werden die Filterelemente mit einem Filterüberzug umgeben, der je nach Anwendungsfall nur das gewünschte Filtrat hindurchtreten läßt, woraufhin das Filtrat durch die Öffnungen in den Filterelementen ins Innere der Filterelemente gelangt und von dort abgezogen wird.

Um die Filtrationsgeschwindigkeit zu erhöhen, werden derartige Filtervorrichtungen häufig unter erhöhtem Druck betrieben. In einigen Filtervorrichtungen wird zudem gezielt eine turbulente Strömung erzeugt, um den Aufbau von an den Filterüberzügen haftenden Filterkuchen oder Filterrückständen zu verhindern. Eine geeignete Turbulenz in der Filtervorrichtung kann hierbei sowohl durch das Rotieren der Filterelemente, aber auch durch das Vorsehen turbulenzerzeugender Einbauten, wie etwa Rotoren, erreicht werden.

Aus den oben genannten Anforderungen eines Betriebs der Filtervorrichtungen unter erhöhtem Druck, aber auch in einem turbulenten Strömungsfeld, werden an die Befestigung der Filterüberzüge auf den Filterelementen besondere Anforderungen gerichtet. So müssen die Filterüberzüge einerseits eng auf den Filterelementen anliegen, andererseits soll die Gefahr einer möglichen Verletzung der Filterüberzüge weitgehend vermieden werden, da hierdurch die erwünschte Reinheit des Filtrats beeinträchtigt würde. Zuletzt muß auch Sorge dafür getragen werden, daß die zu filtrierende Flüssigkeit nicht in Form einer Leckströmung unter Umgehung des Durchtritts durch die Filterüberzüge direkt in die Filterelemente eintreten kann. Da die Durchtrittsöffnungen in den Filterelementen in der Regel bei weitem größer als die Durchtrittsöffnungen in den Filterüberzügen sind, würde auch dies zu einer unerwünschten Verschlechterung der Filtrateinheit führen.

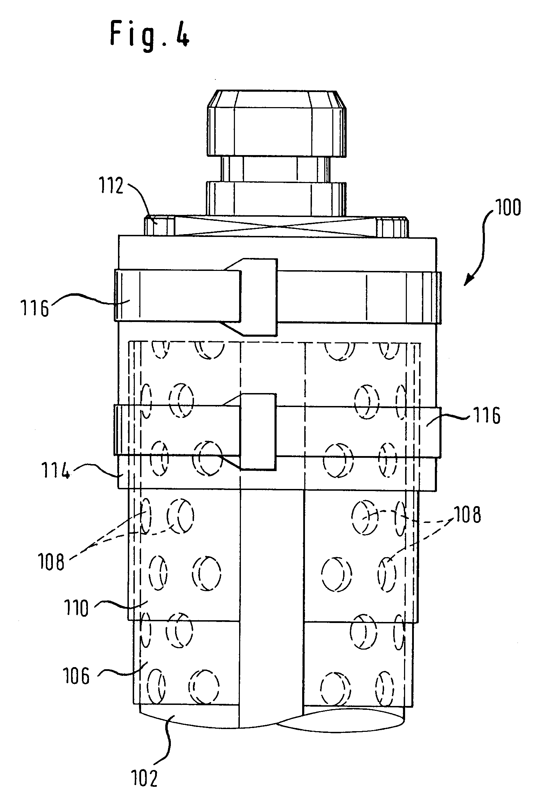

Fig. 4 zeigt eine herkömmliche Befestigungsvorrichtung eines Filterüberzugs auf einem Filterelement, dessen eines, stirnseitiges Ende in Fig. 4 dargestellt ist und das allgemein mit Referenzzeichen 100 bezeichnet wird. Über dem Trägerrohr 102 des zylinderförmigen Filterelements, in dem eine in Längsrichtung verlaufende Filtratleitung gebildet ist, wird zunächst ein Drainagegewebe 106 angeordnet, das zum einen die Aufgabe besitzt, die Stabilität einer darüber angeordneten Filterfolie im Bereich der Durchtrittsöffnungen 108 im Trägerrohr 102 sicherzustellen, andererseits das durch die im Bereich ihrer gesamten Fläche durch die Filterfolie durchtretende Filtrat auf die Durchtrittsöffnungen 108 hinzulenken. Über dem Drainagegewebe 106 befindet sich die Membran 110, die selbst wieder mehrschichtig aufgebaut sein kann.

Am stirnseitigen Ende des Filterelements 102 ist ein Anschlußstück 112 befestigt. Diese Befestigung kann auf verschiedene Weise, im Falle der Verwendung von Metallteilen, beispielsweise durch Schweißen, geschehen.

Die Befestigung der Membran 110 sowie des Drainagegewebes 106 auf dem Trägerrohr wird herkömmlicherweise dadurch ausgeführt, daß ein Schlauchstück 114 eng anliegend sowohl über das Trägerrohr mit dem darüber angeordneten Drainagegewebe 106 sowie die Membran 110 als auch über das Anschlußstück 112 geschoben wird. Schließlich werden Klemmschellen 116 sowohl im Bereich des Anschlußstückes 112 als auch im Bereich der oben beschriebenen Trägerrohr-Drainagegewebe-Membran-Schlauchstück-Schichtung befestigt.

Diese herkömmliche Befestigung eines Filterüberzuges auf einem Filterelement unter Verwendung von Klemmschellen sowie einem Schlauchstück ist sehr aufwendig und insbesondere bezüglich des Aufschiebens des Schlauchstückes schwierig. Gerade bei diesem Befestigungsvorgang kann die sehr dünne Filterfolie verletzt werden und muß daraufhin gegen eine neue ersetzt werden. Tritt im Betrieb eine Verletzung einer Filterfolie auf, so stellt der Wechsel des Filterüberzugs eine sehr zeitaufwendige Reparaturmaßnahme dar.

Die WO 89/01358 beschreibt eine Filterkerze, die aus einem zylindrischen Stützkörper, einem über den zylindrischen Stützkörper geschobenen schlauchförmigen Filtermantel und einem Kopfteil besteht. Sowohl ein Fußteil wie auch das Kopfteil besitzen zum ein Innengewinde, das auf das Außengewinde des Stützkörpers aufgeschraubt werden kann, sowie Überwurfringe, die sich über die Endbereiche des Filterstrumpfes erstrecken und eine konische Innenform aufweisen. Der keilförmige Spalt zwischen dem Filterstrumpf und der konischen Innenfläche des Überwurfringes kann entweder mit einem Dichtmittel ausgefüllt werden, oder aber es wird anstelle des Dichtmittels ein Dichtungsring verwendet, der mit Hilfe eines Druckringes lagefixiert wird. Schließlich kann die Dichtung zwischen Kopf- und Fußteil und dem Filterstrumpf auch jeweils dadurch erreicht werden, daß nach dem Aufschrauben des Kopfteils und des Fußteils der jeweilige Überwurfring verformt wird und damit gegen den Filterstrumpf klemmt. Diese letztgenannte Möglichkeit der Verbindung ist allerdings nicht oder nur mit großem Aufwand demontierbar.

Die DE 32 49 756 offenbart eine Filterkerze, bestehend aus einem metallischen Tragkörper und einem darüber angeordneten zylindrischen Stützkörper aus Kunststoff, der für die zu filtrierende Flüssigkeit permeabel ist. Über dem Stützkörper ist ein Filterstrumpf angeordnet, der um einen Stützring herumgelegt und anschließend mit einem Klemmring befestigt wird, wobei der Klemmring das Filterstrumpfende gegen die Innenseite des Tragkörpers beziehungsweise gegen die Außenseite des Stützringes drückt. Die Klemmflächen des Klemmringes sind unter einem geringen Winkel zur Ringachse geneigt, um eine Klemmwirkung zu erzielen und Filterstümpfe unterschiedlicher Dicke festspannen zu können. Zusätzlich besitzt die Innenseite des aus Kunststoff gespritzten Klemmringes Rippen, wodurch der Klemmring zugleich als Dichtring zwischen der Filterkerze und der Trägerplatte dient.

Das Befestigen des Filterstrumpfes geschieht durch Überschieben desselben auf den mit dem Stützkörper überzogenen Tragkörper und über den Stützring, woraufhin der obere Endabschnitt des Filterstrumpfes um den Stützring herumgelegt wird. Abschließend wird von oben der Klemmring aufgeschoben, festgedrückt und die Filterkerze von unten an der Trägerplatte montiert.

Die DE 32 49 756 bildet den Oberbegriff des Patentanspruchs 1.

Es ist die der vorliegenden Erfindung zugrundeliegende Aufgabe, eine Befestigungsvorrichtung für einen Filterüberzug auf einem Filterelement derart auszuführen, daß ein schneller und bequemer Wechsel von Filterüberzügen an einem Filterelement ermöglicht wird und hierbei die Gefahr einer Verletzung des Filterüberzugs verringert wird.

Diese Aufgabe wird dadurch gelöst, daß ein elastisches Anpreßelement den Filterüberzug im nahe der ersten Stirnseite des Filterelements gelegenen Bereich der Mantelfläche des Filterelements eng anliegend umgibt; ein elastisches Abdichtelement an der ersten Stirnseite des Filterelements im Bereich des Überganges zur Mantelfläche eng anliegt; und ein Fixierelement das elastische Anpreßelement und das elastische Andichtelement jeweils in ihrer Lage fixiert.

Durch das Vorsehen eines elastischen Anpreßelementes wird einerseits eine gleichmäßige Einleitung des Anpreßdruckes in den über der Mantelfläche des Filterelements angeordneten Filterüberzug erreicht, andererseits durch eine möglichst gleichmäßige Einleitung der Kraft die Gefahr einer Verletzung des Filterüberzugs verringert.

Das Vorsehen eines elastischen Abdichtelements an der Stirnseite des Filterelements im Bereich des Übergangs zur Mantelfläche verhindert das ungewollte Auftreten eines Leckstromes zwischen Filterelement und dem darüber angeordneten Filterüberzug hindurch.

Beide elastischen Elemente, das elastische Anpreßelement wie auch das elastische Abdichtelement werden gleichzeitig durch ein einziges Fixierelement in ihrer Lage festgehalten. Dadurch ist, anders als in dem anhand von Fig. 4 dargestellten Beispiel unter Verwendung von zwei Klemmschellen, nur ein einziges Befestigungselement erforderlich.

Nach einer bevorzugten Ausführungsform sind das elastische Anpreßelement und das elastische Abdichtelement einstückig ausgeführt. Dadurch kann die Befestigung eines Filterüberzuges auf einem Filterelement weiter vereinfacht werden, indem lediglich ein einziges elastisches Element verwendet wird, das einerseits dem Anpressen der Filterüberzüge auf die Mantelfläche des Filterelements, andererseits dem Andichten der Stirnseite des Filterelements, dient.

Nach einer weiteren Ausführungsform ist das Filterelement stirnseitig mit einem Anschlußstück drehfest verbunden. Durch das Vorsehen eines Anschlußstückes kann das Filterelement bequem in einer beliebigen Weise befestigt werden, beispielsweise mit anderen Filterelementen verbunden werden, aber auch mit einer Behälterwandung einer Filtervorrichtung oder einer Rotoreinrichtung zur Bewegung des Filterelements. Aus dem letztgenannten Grund ist das Anschlußstück bevorzugt drehfest mit dem Filterelement verbunden. Im oben erwähnten Fall des Erzeugens gezielter Strömungen in einer Filtervorrichtung zum Verhindern des Aufbaus von Filterrückständen unter Verwendung um ihre Längsachse rotierender Filterelemente wird eine derartige drehfeste Verbindung benötigt.

Nach einer bevorzugten Ausführungsform besitzt das Anschlußstück in unmittelbarer Nähe zur ersten Stirnseite des Filterelements eine Einkerbung am Umfang, in welche das elastische Abdichtelement eingreift. Durch das Eingreifen des elastischen Abdichtelements in eine solche Einkerbung, beispielsweise einen Freistich, auf dem Anschlußstück, kann eine einfache und wirkungsvolle Abdichtung der Filterelemente-Filterüberzug-Verbindung erreicht werden. Wie eingangs erwähnt, werden Filtervorrichtungen häufig unter erhöhtem Druck betrieben, um die Filtrationsgeschwindigkeit zu erhöhen. Aus diesem Grund kommt einer möglichst guten Abdichtung der stirnseitigen Kontaktbereiche zwischen Filterüberzügen und Filterelementen eine sehr wichtige Rolle zu.

Nach einer bevorzugten Ausführungsform ist das Fixierelement auf dem Anschlußstück verschiebbar angeordnet und lagefixierbar. Dadurch läßt sich einerseits das elastische Abdichtelement durch ein Verschieben des Fixierelements auf dem Anschlußstück gegen die Stirnseite des Filterelements drücken und damit eine gute Abdichtung erreichen, andererseits kann zugleich bei geeigneter Formgebung des Fixierelements wie auch des elastischen Anpreßelements der Anpreßdruck des Filterüberzugs auf der Mantelfläche des Filterelements eingestellt werden.

Vorzugsweise besitzt das Filterelement einen kommunizierenden Hohlraum in dem Filterelement selbst wie auch im angrenzend darin befestigten Anschlußstück.

Ist das Filterelement so in einer Filtervorrichtung angeordnet, daß es nur an einem stirnseitigen Ende mit einer Behälterwandung verbunden ist, durch die das Filtrat abgeführt wird, so muß die im Behälter endende Stirnseite des Filterelementes gegen das Eindringen ungereinigter Flüssigkeit abgedichtet werden. Dies kann dadurch erreicht werden, daß ein Anschlußstück zur Anwendung gelangt, das nicht mit einem Hohlraum versehen ist, so daß dieses Anschlußstück eine zweite Stirnfläche des Filterelements dicht abschließt.

Nach einer bevorzugten Ausführungsform ist das Fixierelement rotationssymmetrisch ausgebildet und besitzt ein Außengewinde. Die rotationssymmetrische Ausbildung des Fixierelements und das Vorsehen eines Außengewindes kann zu einer weiteren konstruktiven Vereinfachung der Filterelemente genutzt werden. Wie bereits oben erwähnt, erfüllt das Fixierelement bereits zwei Aufgaben, das Andrücken der Filterüberzüge auf der Mantelfläche der Filterelemente wie auch das stirnseitige Abdichten der Filterelemente. Gleichzeitig kann das mit einem Außengewinde versehene Fixierelement dahingehend verwendet werden, daß mit Hilfe des Fixierelementes die Filterelemente in einer Wandung bzw. einem Deckel einer Filtervorrichtung befestigt werden, indem die Fixierelemente in korrespondierende Gewindeöffnungen in der Wandung der Filtervorrichtung eingeschraubt werden.

Vorzugsweise ist auch das Anschlußstück rotationssymmetrisch ausgebildet und mit einem Außengewinde versehen. Hierdurch kann das bevorzugt auf dem Anschlußstück verschiebbar angeordnete Fixierelement auf bequeme Weise mit dem Anschlußstück verbunden, axial verschoben und in seiner Lage fixiert werden. Alternativ kann das Außengewinde auf dem Anschlußstück ebenfalls der Befestigung eines Filterelements an einer Wandung einer Filtervorrichtung, aber auch der Befestigung an einem Element dienen, das verschiedene Filterelemente miteinander verbindet.

Nachfolgend wird die Erfindung an einem Ausführungsbeispiel anhand der beigefügten Zeichnungen rein beispielhaft erläutert. Es zeigen:
- Fig. 1: eine zylinderförmige Filterkerze mit zwei stirnseitigen Anschlußstücken gemäß einer Ausführungsform der vorliegenden Erfindung;
- Fig. 2: eine Detailansicht der stirnseitigen Befestigung eines Filterüberzuges auf einer Filterkerze mit einem eingeklemmten Anschlußstück;
- Fig. 3: eine Detailansicht der stirnseitigen Befestigung eines Filterüberzuges auf einer Filterkerze mit einem eingepreßten Anschlußstück; und
- Fig. 4: eine herkömmliche Befestigung eines Filterüberzuges auf einem Filterelement unter Verwendung von Spannschellen.

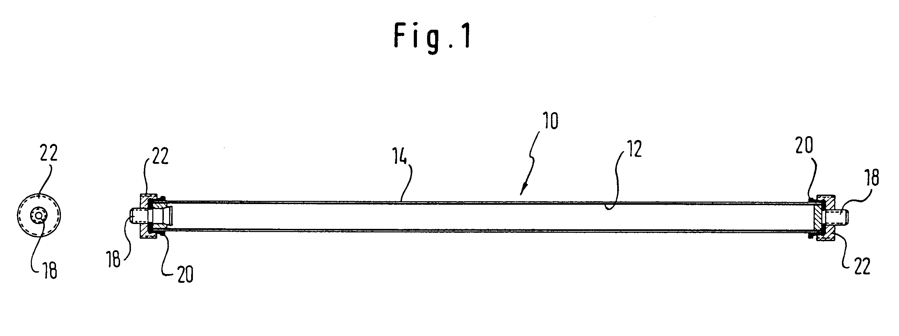

Fig. 1 zeigt ein Filterelement in Form einer zylinderförmigen Filterkerze, die allgemein mit Referenzzeichen 10 bezeichnet ist. Da derartige Filterelemente häufig in Form zylinderförmiger Filterkerzen ausgebildet sind, wird in den nachfolgenden Ausführungsbeispielen jeweils die erfindungsgemäße Befestigungsvorrichtung an einer zylinderförmigen Filterkerze erläutert werden, jedoch sind beliebige andere Geometrien der Filterelemente in gleicher Weise denkbar.

Die Filterkerze 10 besteht aus einem zylinderförmigen Trägerrohr 12, in dem sich Durchtrittsöffnungen für die zu filtrierende Flüssigkeit befinden. Das Trägerrohr 12 besitzt nicht notwendigerweise eine rohrförmige Geometrie; so können sich beispielsweise auch Versteifungen und Verstrebungen im Inneren des Trägerrohres 12 befinden, wenn ein Werkstoff geringerer Festigkeit verwendet wird oder aber die Betriebsbedingungen eine sehr hohe Steifigkeit des Filterelements erfordern. Das Trägerrohr kann je nach dem verwendeten Arbeitsmedium und dem Betriebsdruck in der Filtervorrichtung aus einem geeigneten Werkstoff gefertigt sein, wie Metall, Kunststoff, Keramik oder einem gesinterten Werkstoff. Die Durchtrittsöffnungen für das Filtrat sind vorzugsweise in Form von ausgestanzten Löchern ausgeführt, die einen Durchmesser im Bereich von etwa 3 mm besitzen und deren Summe der offenen Querschnitte etwa 40 Prozent der Mantelfläche der Filterkerze 10 entspricht.

Über dem Trägerrohr 12 ist der Filterüberzug 14 angeordnet, dessen in der Regel mehrschichtiger Aufbau später eingehender erläutert wird.

Die Befestigung der Filterüberzüge 14 auf dem Trägerrohr kann auf verschiedene Weise geschehen, beispielsweise durch das Überstreifen vorgefertigter Schlauchelemente, deren Abmessungen so vorgegeben sind, daß sie entlang der Mantelfläche des Trägerrohres 12 eng anliegen. Eine andere Möglichkeit neben der Verwendung von Schlauchmeterware ist das Überstreifen stirnseitig geschlossener Säcke, die lediglich eine Befestigung am offenen Ende erfordern. Im Stand der Technik werden Filterüberzüge herkömmlicherweise dadurch befestigt, daß einzelne, ebene Membranstücke um das Trägerrohr herum gelegt werden und mittels einer Klemmvorrichtung daran befestigt werden. Diese Klemmvorrichtung besteht in der Regel aus einer in Längsrichtung des Trägerrohres verlaufenden Klemmleiste, beispielsweise in Form einer schwalbenschwanzförmigen Nut im Trägerrohr, in die sowohl der Anfang als auch das Ende der um das Trägerrohr in Umfangsrichtung gewickelten Filtermembrane eingelegt wird und anschließend mit einem geeigneten Klemmelement, beispielsweise einem O-Ring, einer Spreizschiene oder einer Formdichtung, oder durch Klebung mit einem Kunststoffband, oder durch das Ausgießen mit einem geeigneten Material, wie beispielsweise Kunstharz, befestigt wird.

Die in Fig. 1 dargestellte Filterkerze 10 ist an beiden stirnseitigen Enden mit einer Befestigungseinrichtung versehen, die aus verschiedenen Elementen (18, 20, 22) besteht und mehrere Aufgaben erfüllt. Diese Befestigungseinrichtung dient zum einen dazu, einen Filterüberzug 14 am Trägerrohr 12 zu befestigen, andererseits das unerwünschte Einbeziehungsweise Ausdringen von ungereinigter Flüssigkeit zwischen Filterüberzug 14 und Trägerrohr 12 im Bereich der stirnseitigen Enden des Trägerrohres zu verhindern, zuletzt aber auch, um die Filterkerze in einer gewünschten Weise in oder an einer Filtervorrichtung zu befestigen.

In der Regel werden die Filterkerzen 10 in einer Filtervorrichtung derart verwendet, daß in einen Filterbehälter die zu reinigende Flüssigkeit eingeleitet wird und anschließend in die Filterkerzen 10 eindringt, woraufhin das in den Filterkerzen 10 befindliche, gereinigte Filtrat in geeigneter Weise abtransportiert wird. Hierzu sind je nach Anwendungsfall eine oder beide stirnseitigen Befestigungseinrichtungen mit Durchtrittsöffnungen für das gereinigte Filtrat versehen.

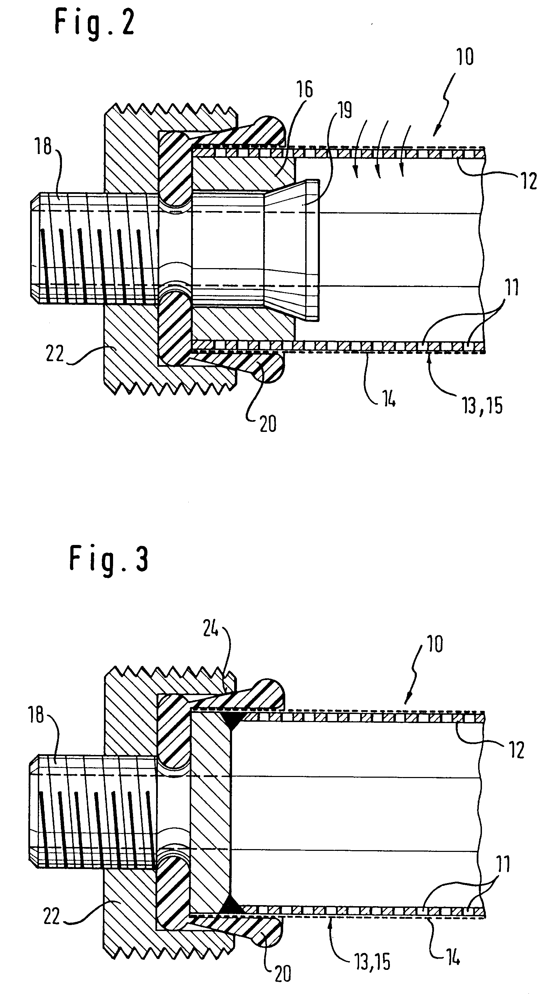

Wie anhand von Fig. 2 erläutert wird, besteht die in Fig. 1 dargestellte Befestigungseinrichtung im wesentlichen aus einem Anschlußstück 18, einem elastischen Element 20 sowie einem Überwurfstück 22.

Fig. 2 zeigt im Detail die stirnseitige Befestigung eines Filterüberzuges auf einer Filterkerze mit einem eingeklemmten Anschlußstück. Das Trägerrohr 12 ist mit einem Filterüberzug 14 umgeben.

Der Filterüberzug 14 besteht aus mehreren Schichten, einer Drainageschicht und einer Membran. Die Drainageschicht liegt direkt auf dem Trägerrohr auf und dient zum einen dazu, das durch die darüberliegende Membran hindurchgetretene Filtrat auf die Öffnungen im Trägerrohr 12 hinzulenken, andererseits der Membran eine höhere Stabilität zu verleihen. Würde die Membran direkt auf dem Trägerrohr aufliegen, so könnte diese bei einem erhöhten Außendruck im Bereich der Öffnungen im Trägerrohr nach innen einbeulen und bei sehr hohen Außendrücken sogar beschädigt werden. Die Drainageschicht besteht aus einem Material mit einem deutlich größeren Öffnungsquerschnitt als die Membran und kann aus Kunststoff oder auch, für spezielle Anwendungen, aus Metall bestehen. Vorzugsweise kommt eine Drainageschicht aus einem Geflecht aus CrNi-Gewebe zur Anwendung.

Die über der Drainageschicht angeordnete Membran ist in der Regel wiederum aus mehreren Schichten aufgebaut. In der Technik verwendete Membrane bestehen meist aus einem Trägermaterial, auf dem eine Deckschicht aufgespritzt wird. Häufig besteht eine derartige Deckschicht aus Polyethersulfon.

Nachdem das Filtrat durch die Deckschicht sowie das Trägermaterial der Membran und schließlich durch die Drainageschicht hindurchgetreten ist, tritt es, wie anhand von Pfeilen angedeutet ist, durch die Öffnungen 11 im Trägerrohr 12 in das Innere des Filterelements hindurch.

Der Filterüberzug 14 ist, wie in Fig. 2 gezeigt ist, bis in den Bereich des stirnseitigen Endes des Trägerrohres 12 auf diesem aufgeschoben. Die hierbei möglichen Geometrien des verwendeten Filterüberzuges und deren Befestigung wurden bereits oben erläutert.

Im dargestellten Beispiel ist ein Anschlußstück 18 am Stirnende des Trägerrohres 12 befestigt und ragt in axialer Richtung des Trägerrohres über dessen stirnseitiges Ende hinaus. Das Anschlußstück 18 besitzt im dargestellten Beispiel einen Konus 19, mit dem das Anschlußstück in Kontakt zu einem im Trägerrohr 12 eingeklemmten Zwischenstück 16 im Trägerrohr befestigt wird. Sowohl das Anschlußstück 18 als auch das Zwischenstück 16 sind aufgrund der Wärmecharakteristik verschiedener Stoffe vorzugsweise aus demselben Material gefertigt wie das Trägerrohr. Im dargestellten Fall eines zylinderförmigen Trägerrohres ist auch das Anschlußstück 18 vorzugsweise rotationssymmetrisch ausgebildet. In unmittelbarer Nähe zur Stirnseite des Trägerrohres 12 ist im Anschlußstück 18 ein Freistich gebildet, in den ein elastisches Element 20 eingreifen kann.

Im dargestellten Ausführungsbeispiel ist das elastische Element 20 einstückig als rotationssymmetrisches Teil ausgebildet; die erfindungsgemäße Aufgabe kann jedoch in gleicher Weise durch zwei voneinander getrennte elastische Elemente ausgeführt werden, ein elastisches Anpreßelement, das die stirnseitige Kontaktfläche zwischen Trägerrohr 12 und Filterüberzug 14 abdichtet, und ein elastisches Abdichtelement, das andererseits den Filterüberzug 14 am Umfang des Trägerrohres 12 festklemmt. Das elastische Element 20 vereint beide obengenannten elastischen Elemente und ist vorzugsweise aus einem Kunststoffmaterial gefertigt, beispielsweise aus EPDM (Viton) gefertigt.

Die Befestigung des elastischen Elements 20 geschieht durch ein Fixierelement in Form eines Überwurfstückes 22, das zwei Aufgaben erfüllt. Zum einen wird das elastische Element gegen die Stirnseite des Trägerrohres gedrückt, um damit das stirnseitige Ende gegen ein Eindringen von Flüssigkeit zwischen Trägerrohr 12 und Filterüberzug 14 in diesem Bereich zu verhindern, andererseits wird das elastische Element 20 entlang des Umfanges gegen die Mantelfläche des Filterüberzuges 14 im Bereich der Stirnseite des Trägerrohres 12 gedrückt. Dadurch wird der Filterüberzug 14 fest gegen das Trägerrohr 12 gepreßt.

Das Überwurfstück 22 ist rotationssymmetrisch ausgeführt und besitzt sowohl ein Innen- als auch ein Außengewinde. Das Innengewinde des Überwurfstückes 22 greift in ein entsprechendes Außengewinde des Anschlußstückes 18 ein, wodurch das Überwurfstück auf dem Anschlußstück 18 aufgeschraubt werden kann. Durch die axiale Bewegung des Überwurfstückes auf dem Anschlußstück in Richtung des stirnseitigen Endes des Trägerrohres beim Aufschrauben des Überwurfstückes wird der stirnseitige Druck auf das elastische Element ausgeübt und kann dieser abhängig von der Drehung des Überwurfstückes eingestellt werden. Das Außengewinde an dem Überwurfstück dient beispielsweise dem Einschrauben des gesamten Filterelementes 10 in eine Wandung eines Behälters, in dem der Filtriervorgang durchgeführt wird. Das Vorsehen des Außengewindes am Überwurfstück ist jedoch lediglich eine bevorzugte Ausführungsform, weil eine Befestigung des Filterelementes 10 in gleicher Weise mittels des Außengewindes am Anschlußstück 18 oder auf eine andere, beliebige Weise geschehen kann.

Nach einer weiteren Ausführungsform besitzt das rotationssymmetrisch ausgeführte Überwurfstück 22 lediglich ein Außengewinde. Das Überwurfstück 22 wird auf das mit einem Außengewinde versehene Anschlußstück 18 aufgeschoben, ohne in Eingriff mit dem Außengewinde des Anschlußstückes 18 zu gelangen. Anschließend wird mit einem geeigneten Befestigungselement, beispielsweise einer Mutter, die auf das Außengewinde des Anschlußstückes 18 aufgeschraubt wird, das Überwurfstück 22 in seiner Lage fixiert. Der Vorteil dieser Ausführungsform liegt darin, daß die axiale Bewegung des Überwurfstückes 22 ohne eine Rotation desselben durchgeführt werden kann. Hierdurch besteht keine Gefahr, daß durch die Rotationsbewegung des Überwurfstückes 22 das elastische Element 20 und möglicherweise der zwischen dem elastischen Element 20 und dem Trägerrohr 12 eingeklemmte Filterüberzug 14 in Rotationsrichtung des Überwurfstückes 22 mitbewegt werden, wodurch es zu einer Beschädigung des Filterüberzuges 14 kommen könnte.

In Fig. 2 wurde lediglich eine der beiden Stirnseiten eines Filterelementes 10 im Detail gezeigt. Bei herkömmlichen Filtervorrichtungen sind in der Regel die Filterelemente mit einem stirnseitigen Ende in einer Behälterwandung befestigt und das Filtrat wird an dieser Stelle aus der Vorrichtung abgezogen, während das andere Ende entweder frei im Behälterinnenraum endet oder aber an Behältereinbauten oder über ein Zwischenelement mit anderen Filterelementen verbunden sein kann.

Die in Fig. 2 dargestellte Vorrichtung läßt sich für alle gängigen Befestigungsvarianten in gleicher Weise verwenden. Je nachdem, ob das Filterelement 10 durch das jeweilige stirnseitige Ende entwässert werden soll, befindet sich im Anschlußstück 18 ein Hohlraum, insbesondere eine Bohrung, die mit dem Hohlraum im Inneren des Tägerrohres 12 kommuniziert. Soll hingegen das stirnseitige Ende des Filterelementes 10 dicht gegen die Umgebung abgeschlossen werden, so wird ein Anschlußstück 18 verwendet, das dicht gegen die Umgebung abgeschlossen ist.

Wie oben angesprochen wurde, werden in Filtervorrichtungen häufig eine Vielzahl von Filterelementen 10 verwendet, deren jeweils einen stirnseitigen Enden miteinander verbunden werden, damit die einzelnen Filterelemente beim Erzeugen einer turbulenten Strömung in der Filtervorrichtung nicht in Vibrationen geraten können. Häufig wird dies dadurch erreicht, daß ringförmig angeordnete Filterelemente an ihrem einen stirnseitigen Ende mit einem Ring verbunden werden. Ein derartiger Ring kann am Außengewinde des Anschlußstückes 18, aber auch am Außengewinde des Überwurfstückes 22 befestigt werden.

Zwischen dem Anschlußstück 18 und dem Zwischenstück 16 kann eine Keilnut vorgesehen sein oder eine ähnliche in der Technik bekannte Maßnahme, um das Trägerrohr 12 drehfest mit dem Anschlußstück 18 zu verbinden. Eine drehfeste Verbindung ist beispielsweise dann wichtig, wenn der Filterüberzug, wie anhand von Fig. 1 beschrieben wurde, mittels einer Befestigung in einer längs des Filterelementes verlaufenden Nut angebracht ist und dieser Nutbereich in eine bestimmte Richtung innerhalb der Filtervorrichtung orientiert werden soll.

Fig. 3 zeigt im Detail die stirnseitige Befestigung eines Filterüberzuges auf einer Filterkerze mit einem eingepreßten Anschlußstück. Gleiche Elemente wie die in Fig. 2 dargestellten sind mit denselben Referenznummern bezeichnet und werden im folgenden nicht beschrieben. Der Unterschied zwischen Fig. 2 und 3 liegt in der Befestigung des Anschlußstückes 18 im Trägerrohr 12 des Filterelements. Wie aus Fig. 3 ersichtlich ist, endet das Anschlußstück 18 mit einer kreisförmigen Scheibe, deren Außendurchmesser dem des Trägerrohres 12 entspricht. Die Befestigung zwischen Anschlußstück 18 und Trägerrohr 12 wird durch eine umlaufende Schweißnaht ausgeführt. Wie in der anhand von Fig. 2 beschriebenen Ausführungsform kann das Anschlußstück 18 mit einer Bohrung versehen sein, um den Abzug des Filtrats aus dem Inneren des Trägerrohres 12 zu gestatten, aber auch das Trägerrohr 12 stirnseitig dicht abschließen.

Das elastische Element 20 ist wie bei der anhand von Fig. 2 gezeigten Ausführungsform geformt und wird durch die axiale Verschiebung des Überwurfstückes 22 auf dem Anschlußstück 18 sowohl gegen die Stirnseite des Trägerrohres 12 gepreßt als auch mantelseitig gegen das Trägerrohr mit dem darüber angeordneten Filterüberzug gedrückt.

Wie auch in Fig. 2 dargestellt ist, besitzt das Überwurfstück im Kontaktbereich zum elastischen Element eine geneigte Fläche 24, die ein axiales Verschieben des Überwurfstückes über dem elastischen Element gestattet und gleichzeitig eine Erhöhung des mantelseitigen Anpreßdruckes des elastischen Elements mit zunehmender axialer Bewegung des Überwurfstückes in Richtung der Stirnfläche des Trägerrohres bewirkt. Im konkreten Ausführungsbeispiel ist hierzu die am inneren Umfang des Überwurfstückes 22 vorgesehene gefaste Fläche 24 korrespondierend zur Winkelneigung der äußeren Umfangsfläche des elastischen Elementes im Kontaktbereich zum Überwurfstück ausgebildet.

Die Befestigung des Filterüberzuges an einer Filterkerze 10 geschieht in der folgenden Weise. In einem ersten Arbeitsschritt wird über das Trägerrohr, an das bereits stirnseitig die Anschlußstücke in einer der oben beschriebenen Weisen befestigt worden sind, ein Filterüberzug bestehend aus einem Drainagegewebe sowie einer Membran angeordnet. Dies kann je nach Geometrie des verwendeten Filterüberzuges entweder, im Falle röhrenförmig vorgefertigter Filterüberzüge, durch Überstreifen auf das Trägerrohr, oder im Falle von ebenen Filterüberzugstücken durch ein Herumlegen um das Trägerrohr sowie eine Befestigung mittels einer im Trägerrohr längs verlaufenden Nut und einem geeigneten Befestigungselement darin geschehen.

Anschließend wird von der Stirnseite her das elastische Element oder, im Falle zweier elastischer Elemente, beide elastischen Elemente über das Anschlußstück geführt, wobei das die Stirnseite des Trägerrohres abdichtende elastische Element vorzugsweise in eine Vertiefung im Anschlußstück eingreift.

Abschließend wird das Überwurfstück auf das Anschlußstück geschoben oder geschraubt, bis es Druck auf das oder die elastischen Elemente ausübt, wodurch einerseits das stirnseitige Ende des Trägerrohres im Bereich der Verbindung zwischen Trägerrohr und Filterüberzug abgedichtet wird, andererseits mantelseitig Druck auf den bis in den Bereich der Stirnseite des Filterelementes gezogenen Filterüberzug ausgeübt wird. Im Falle des Aufschiebens des Überwurfstückes wird dieses, vorzugsweise durch das Aufschrauben einer Kontermutter auf das Anschlußstück, lagefixiert

Abschließend kann das Filterelement im Filterbehälter befestigt werden, in dem das Filterelement mit einem Außengewinde am Anschlußstück oder einem Außengewinde am Überwurfstück in eine Wandung des Filterbehälters eingeschraubt wird.

Durch die erfindungsgemäße Befestigungsvorrichtung wird ein schneller und bequemer Wechsel von Filterüberzügen an dem Filterelement ermöglicht und gleichzeitig die Gefahr einer Verletzung des Filterüberzuges verringert.

## Patentansprüche

1. Befestigungsvorrichtung für einen Filterüberzug (14) auf einem Filterelement (10), insbesondere einer zylinderförmigen Filterkerze (10), mit
- einer Mantelfläche und einer ersten Stirnseite im Bereich des einen Endes des Filterelements (10); und mit
- einem Fixierelement (22), welches ein elastisches Anpreßelement (20) und ein elastisches Abdichtelement (20) jeweils in ihrer Lage fixiert;
dadurch **gekennzeichnet**, daß
- das elastische Anpreßelement (20) den Filterüberzug (14) im nahe der ersten Stirnseite des Filterelements (10) gelegenen Bereich der Mantelfläche des Filterelements (10) eng anliegend umgibt; und
- das elastische Abdichtelement (20) an der ersten Stirnseite des Filterelements (10) im Bereich des Überganges zur Mantelfläche eng anliegt.

2. Befestigungsvorrichtung nach Anspruch 1, dadurch gekennzeichnet, daß das elastische Anpreßelement (20) und das elastische Abdichtelement (20) einstückig ausgeführt sind.

3. Befestigungsvorrichtung nach Anspruch 1 oder 2, dadurch gekennzeichnet, daß das Filterelement stirnseitig mit einem Anschlußstück (18) drehfest verbunden ist.

4. Befestigungsvorrichtung nach Anspruch 3, dadurch gekennzeichnet, daß das Anschlußstück (18) in unmittelbarer Nähe zur ersten Stirnseite des Filterelements eine Einkerbung am Umfang besitzt; und das elastische Abdichtelement (20) in diese Einkerbung eingreift.

5. Befestigungsvorrichtung nach Anspruch 3, dadurch gekennzeichnet, daß das Fixierelement (22) auf dem Anschlußstück verschiebbar angeordnet und lagefixierbar ist.

6. Befestigungsvorrichtung nach Anspruch 3, dadurch gekennzeichnet, daß das Filterelement (10) einen kommunizierenden Hohlraum in dem Filterelement und im Anschlußstück (18) besitzt.

7. Befestigungsvorrichtung nach Anspruch 3, dadurch gekennzeichnet, daß das Anschlußstück (18) eine zweite Stirnfläche des Filterelements dicht abschließt.

8. Befestigungsvorrichtung nach Anspruch 1 oder 2, dadurch gekennzeichnet, daß das Fixierelement (22) rotationssymmetrisch ausgebildet ist und ein Außengewinde besitzt.

9. Befestigungsvorrichtung nach Anspruch 3, dadurch gekennzeichnet, daß das Anschlußstück (18) rotationssymmetrisch ausgebildet ist und ein Außengewinde besitzt.

10. Befestigungsvorrichtung nach Anspruch 9, dadurch gekennzeichnet, daß das Fixierelement (22) rotationssymmetrisch ausgebildet ist und ein Innengewinde besitzt und auf dem Anschlußstück (18) aufschraubbar ist.

11. Befestigungsvorrichtung nach Anspruch 9, dadurch gekennzeichnet, daß das Fixierelement (22) rotationssymmetrisch ausgebildet ist und auf dem Anschlußstück (18) verschiebbar angeordnet ist; und ein Befestigungselement in Gewindeeingriff mit dem Anschlußstück (18) steht und in Kontakt zu dem Fixierelement (22) bringbar ist.
